# EUROPEAN PATENT APPLICATION

(11) **EP 1 876 553 A1**
(43) Date of publication of application: **09.01.2008**
(21) Application number: 06253562.0
(22) Date of filing: 07.07.2006
(51) Int. Cl.: G06K 9/00

(54) **Method and system for engineering process graphics using sketch recognition**

(71) Applicant: ABB RESEARCH LTD., 8050 Zürich (CH)
(72) Inventor: Torgeir, Enkerud, 0575 Oslo (NO)
(74) Representative: Lord, Michael

(57) **Abstract**

The present invention concerns a method for generating process graphics for an industrial process, comprising the following steps: recording a digital image of a graphic in the form of a sketch drawn free-hand by a user, said sketch representing an engineering process element into a computing device, processing the digital image to provide an enhanced process graphic element, and identifying said sketch as at least one process graphic element by using at least a library providing information helping to interpret said sketch and geometrical sketch elements. A system for generating process graphics for an industrial process is also disclosed.

## Description

### FIELD OF THE INVENTION

The present invention relates to the field of computer graphics. Specifically it relates to the field of computer-aided process graphics development and maintenance, and to a method and a system for generating process graphics for an industrial process.

### BACKGROUND

The man-computer interface in industrial process control rooms often consist of hundreds or thousands of process graphics - schematic graphical representations of the components and structure of the plant. These process graphics are time-consuming and inefficient to design and maintain using different tools and generating different documentation for all stages of the design process. It often requires cooperation between different types of engineering personnel (process engineers, control engineers, graphic designers and application engineers).
In early stages of design, free-hand drawing and sketching is widely used to record ideas, convey them to others and test out new concepts because this is a natural and efficient way of interaction, and describing the ideas is easily done in a collaborative environment with simple tools such as whiteboards and markers. The free-hand drawings are reviewed by others and decisions are made based on these drawings. The review can be done at an early stage with people who do not necessarily have the domain specific knowledge required to evaluate visualizations where specific libraries and standards are implemented. There is however little use and limited support for doing such sketching in a computer-aided environment and the results are only used as documentation and not as a starting point for future work.

When the initial work is done by hand sketching, one moves to a CAD environment to do the same drawings here. These drawings then form the basis for the process graphics engineering work done in the systems graphics editor. Traditional systems for process graphics engineering are designed to use libraries of software components that are inserted into the process graphics by browsing for them in the libraries or choosing from tools available in the engineering system's user interface. The limited space available for such applications on a computer screen combined with the high number of visual software components used to create a process graphics display makes this approach cumbersome and inefficient to work with. This may be perceived as frustrating to the user, especially in early stages where the user is most interested in the basic design of the process graphics, and not actual appearance of the real components. This fact leads to the users wanting to draw their design by hand on paper in the early stages just to get the design visualized and form a basis for discussions and decision making. There are several software and hardware solutions available that allow the user to draw their designs by using a tool such as a tablet PC, pressure sensitive pen, stylus board or an electronic whiteboard. This accomplished some of the wishes of the users enabling them to easily draw their designs and distribute them to others to make alterations and make decisions. But when the designs are done on "electronic paper" they still have to be implemented in the designated domain tool such as a process graphics editor.

Previous work in this area is published as a patent application DE 103 61 511 A1 (Siemens AG) with the title "Context-dependent operation of engineering-systems by means of graphical input", disclosing an invention relating to a system, a device and a method for context-dependent operation of engineering systems in the field of automation. A tablet-PC, for example, is used for input of symbols or text elements by a user, for the generation of wiring or functional plans. The user can quasi-sketch the engineering solution similar to on a sketch pad. The symbols and text elements are recognized by the device using the semantics thereof.

In W02005038648 - "Automatic generation of user interface descriptions through sketching" - (Koninkl Philips Electronics NV) a desired graphic user interface (GUI) is sketched and then scanned into memory or is sketched using a stylus whose movements are tracked and recorded in memory. Sketched objects such as windows, lists, buttons and frames are recognized automatically and normalized for the GUI to be created. Containment relations among the objects are recorded in a tree hierarchy to which is attached layout information and information from annotations in the sketch. The tree hierarchy is then formatted for generation of the GUI on a target platform.

There has also been some research in the field of sketch recognition from universities such as MIT CSAIL, Cornell University and Berkeley. MIT has several projects related to the use of free-hand sketching in a computer-aided environment. One example is the Assist project. The assist project aims to create a tool that allows the engineer to sketch a mechanical system as she would on paper, and then allows her to interact with the design as a mechanical system, for example by seeing a simulation of her drawing. The project team has created a tool that allows a user to sketch simple mechanical systems and see simulations of her drawings in a two-dimensional kinematical simulator. The motivation for the MIT project is the fact that early stage design often happens with a pen and paper. This is because it is more effective than stopping the design process to record and modify the computer system each time a design decision is made. It is also more intuitive to use free-hand sketching in this stage and these sketches are faster to make and can easily be reviewed by others at an earlier stage without wasting time implementing the designs on a computer system. Current computer-based design tools for mechanical engineers are not tailored to early stages of design. Most designers use pencil and paper at first, and input their design into CAD systems only after it is nearly complete. The trade-off between the ease of drawing and the precision of a CAD tool is too great for engineers who are just sketching out rough designs.

*Sketchboard* is a 3D CAD software designed to allow the users to convert sketching into simple polygons. The tool is designed to assist architects and designers in developing their designs by sketching. The free-hand sketch recognition part of the software is still experimental.

The University of Washington has developed what they call an informal tool for early stage design of Web sites and User Interface design - DENIM. DENIM uses sketch recognition and gesture recognition to allow the user to make initial designs of web-pages and web site layouts, including navigation between pages on a site. Most Tablet PCs and PDAs have software for recognition of hand writing. This is mainly due to the lack of standard input devices such as keyboard or mouse.

Text recognition software found on devices such as Personal Digital Assistants (PDA) and electronic whiteboard applications such as Smartboard does also relate to prior art in the field of the invention.

In patent application DE102004025810 - (ABB Research Ltd.) a method of automatically generating process graphics from a system control diagram is described. The system uses a standard description language - CAE - to convert system control diagrams to process graphics in a distributed control system.

### SUMMARY OF THE INVENTION

Obviously there is a need to ease the development of process graphics from designer sketches to production-ready computer graphics. Current systems are not well suited for the team-oriented type of work, and the information is often passed between these actors in paper or print-out format. The present invention does make this development process easier.

The present invention provides in a first aspect a method for generating process graphics for an industrial process. The method comprising the following steps: recording a digital image of a graphic in the form of a sketch drawn free-hand by a user into a computing device, said sketch representing an industrial/engineering process element, processing the digital image to provide an enhanced process graphic element, and identifying said digital image as at least one process graphic element by using at least a library providing information helping to interpret said digital image and geometrical sketch elements of said digital image.

The identifying step may further comprise: an identification preparation step clustering said geometrical sketch elements according to information given in a first library, identifying said sketches as symbol objects using a second library containing process symbols, and matching said symbols objects against a third library containing process graphic elements. The results from said steps are separately stored in a layered structure wherein a layer represents said results of at least one of said steps. The results on said layers are in this way available for use in later work, comprising redesign work. The method may also involve additionally at least one of the following user input means: text writing and character recognition, and audio recording and speech recognition. The user input means may be used to link a single instance of said process graphic element to an instance of process equipment in a process plant. The user input means may also be used to identify process value display means to be linked to said instance of process equipment. At least one of the following means may be used to support the identification of a symbol object or a process graphic element on the basis of said digital image: a) statistics of prior use of symbol objects, b) statistics of use of symbol objects in current context, c) knowledge about workflow, d) adaptive learning, e) said user input means, f) menu of alternative symbol objects, said menu being assembled using means a) to e).
In a second aspect the invention provides a system for generating process graphics for an industrial process comprising the following components: sketch input means providing a digital image of a free-hand-drawn sketch, said sketch representing an industrial/engineering process element, sketch presentation means, an engineering workstation, a sketch recognition software, at least one library of computerized/electronic objects, and local or distributed storage means for software components and libraries.

The storage means may provide storage in a layered structure wherein one layer holds a result from at least one processing step in said sketch recognition software. As a result, said layers are available for use in later work, comprising redesign work. Both text writing and character recognition software, and audio recording and speech recognition software may be used in addition as input means. The sketch recognition software may comprises at least one of the following means to support the identification of a symbol object or process graphic element on the basis of said sketch: a) statistics of prior use of symbol objects, b) statistics of use of symbol objects in a current context, c) knowledge about workflow, d) adaptive learning, e) said user input means, f) menu of alternative symbol objects, said menu being assembled using means a) to e). The method and system may provide both real time process data and/or process simulation data to the use of the system.

### BRIEF DESCRIPTION OF THE DRAWINGS

Embodiments of the invention will be described in detail below with reference to the attached drawings where,
Figure 1 shows a flowchart showing the workflow from sketch to process graphic element according to an embodiment of the invention,
Figure 2 shows components used to perform sketching of process graphics according to an embodiment of the invention,
Figure 3 shows the terminology used exemplified by a valve,
Figure 4 shows the different stages of a sketch from input stroke to process graphic element in a layered view according to an embodiment of the invention,
Figure 5 shows the sketch recognition software architecture according to an embodiment of the invention,

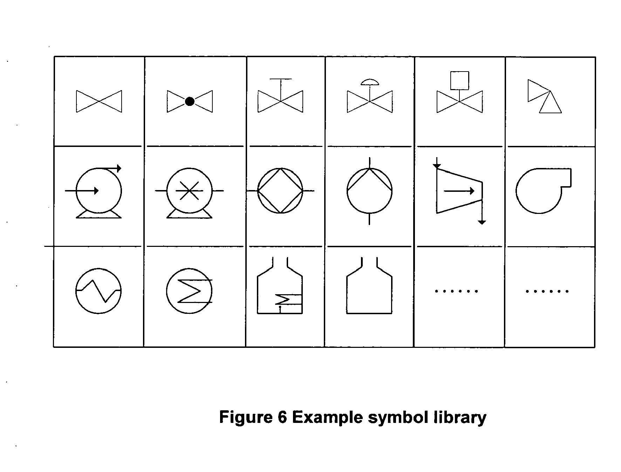

Figure 6 shows an example of a symbol library according to an embodiment of the invention.

### DETAILED DESCRIPTION

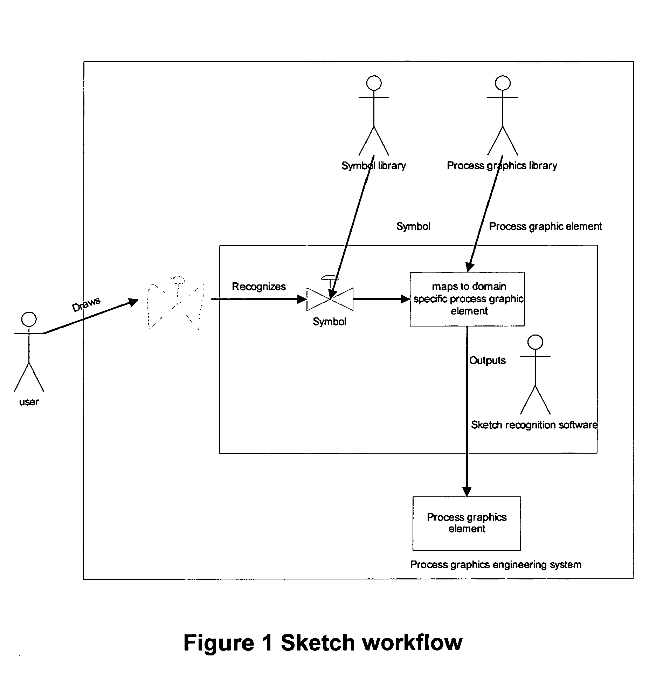

The present invention discloses a method and a system for using free-hand sketching as a principle of engineering process graphics for industrial supervision, control and maintenance in the setting of process industries. Figure 1 represents a flowchart of the workflow from manual sketch of an industrial process element to process graphic element. A user draws a free-hand sketch using e.g. a pressure sensitive pen, stylus board or an electronic whiteboard. The digitized image of the sketch is recognized in a graphical processor device as a symbol by performing image processing and mapping against a digital symbol library. The symbol is then mapped to a domain to provide a domain specific graphic element. The mapping is performed against a process graphics library. The resulting process graphics element is outputted to a process graphics engineering system.

The relevant dimensions of the invention are:
1. The concept of using free-hand sketching in a computer-aided environment for engineering and maintenance of process graphics for an industrial process.
2. Context-dependent sketch recognition by computer system:
   a) Recognition of basic drawing strokes and clustering of strokes to form basic objects.
   b) Mapping of basic objects to context-dependent symbols in libraries.
   c) Mapping of symbols to context-dependent process graphic elements in libraries.
   d) The use of layers to define the context, content or domain of the sketch (for example piping layer: the domain is piping and the user is drawing pipes).
   e) Recognition of sketched input based on likelihood/statistics.
   f) Recognition of sketched input based on a defined user workflow.
   g) Learning system related to mapping of input sketches to symbols.
3. User interface and interaction for sketching of process graphic elements:
   a) A layered presentation and engineering interface where process graphic elements in process graphics can be viewed and edited in different formats (i.e. free-hand drawing, computer enhanced drawing, recognized symbol from symbol library or process graphic element).
   b) Recognition of (hand-written) text to identify sketched objects, and aid for the system to recognize more abstract visualization components.
   c) Combination of sketching and speech recognition for easier interaction with sketching software. Tell the system the context, domain, presentation layer etc.
   Prediction of user intention. Sketch recognition software suggests possible matches to what the user is drawing.

### Sketching of process graphic elements

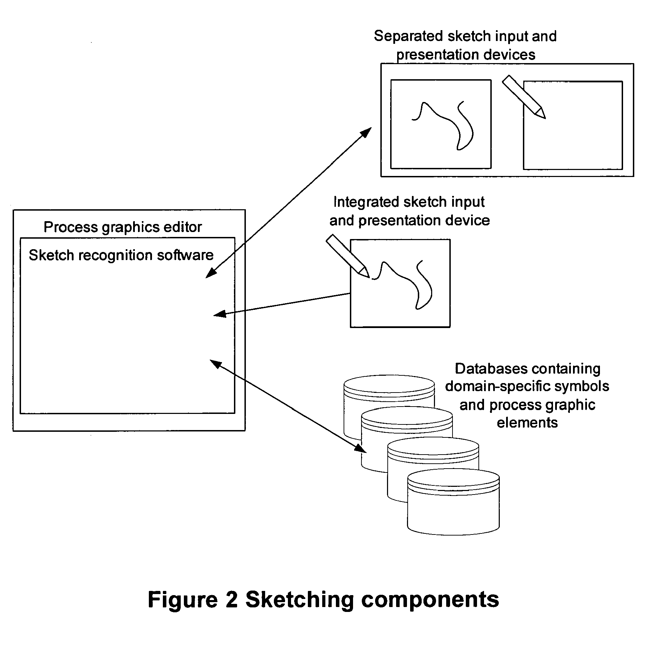

The sketching software is an additional way of doing the engineering and primarily not a different tool than the traditional process graphics editor. The user uses an apparatus to input sketches to the process graphics editor, and the sketch recognition part of the process graphics editor uses a recognition algorithm to map the sketches to process graphic elements. This is shown in Figure 2. Means to input and process sketches to the computer comprise:
- graphical input apparatus,
- a process graphics editor with sketch recognition software,
- libraries of symbols, and
- libraries of process graphic elements.

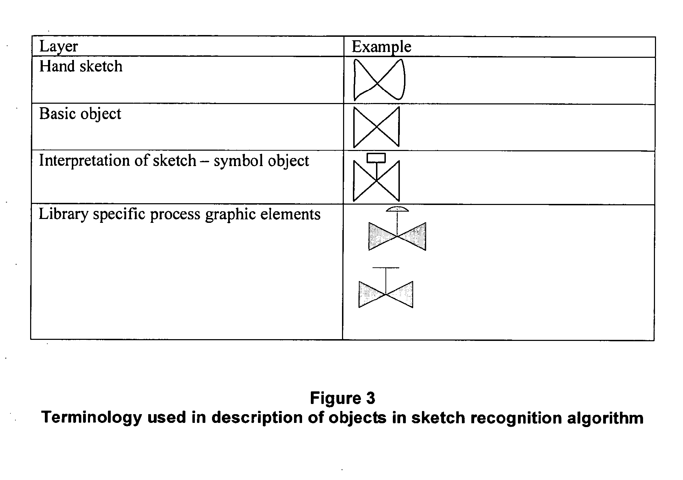

The sketch input and presentation device may be integrated or separated as shown in Figure 2. The libraries of symbols and process graphics elements are contained in databases interacting with the process graphics editor.
Another possible embodiment of the sketching software is to implement it as a standalone component that communicates with the process graphics editor at a specific stage of the engineering process.
The terminology used in description of objects in the sketch recognition algorithm is shown in Figure 3. As shown, a free-hand-drawn sketch is registered and processed into digital data representing a digital image of the manual sketch. This digital image is further processed in different steps to first create a basic object. This basic object is processed in a further step in the process graphics editor and in interaction with the databases containing process elements, to interpret said basic object and provide a symbol object. In the next step, this symbol object is further processed in the process graphics editor in interaction with the databases containing domain specific symbols and process graphics elements, to provide a specific process graphics element representing correctly the manual sketch in the adequate industrial context.

### Context-dependent recognition

After the user has input the sketching strokes to the computer system, the sketch recognition software processes the input through several steps in order to produce the final process graphics. These steps add additional value to the input stroke through recognition and mapping to domain context. The input strokes are recognized as segments and are grouped into clusters of segments to form basic objects that represent an entity that can be mapped to a symbol object from the symbol object library. These symbols also include a context-dependency by the nature of the symbols. This context can be used in the recognition algorithm to provide a preliminary sub-set of symbol mappings by using statistical and work-process knowledge to predict the likelihood of which content the basic objects belong to. This increases the efficiency of the recognition algorithm by narrowing down the first scan envelope. The algorithm also has capabilities to search outside the predicted context, if a mapping is not found within the predicted context. The symbols are static representations of the object and can have varying degrees of detail. An example can be a valve that is sketched without specifying which kind of valve it should be mapped to, or a valve that is sketched with enough detail for the recognition algorithm to map the valve to a safety control valve. Another aspect of the symbol mapping step is that a multitude of the symbols in the symbol libraries may be linked to each other. This means that two or more different sketches of for instance a valve may be mapped to the same symbol of a valve. In this phase of the recognition process, the sketching system needs the possibility to learn from what the user is inputting. This can be done automatically by the system by using the available knowledge about the domain, work processes and previous work done by the users. Another possibility is that the system can demand input from the user when a basic object is not possible to recognize and map to the existing symbol libraries. The new basic object and the corresponding symbol object are added to the symbol libraries and recognition algorithm together with the known dependencies such as context. Another way of teaching the recognition algorithm is through the use of existing process graphics and process graphic elements. These can be fed into the algorithm and form the basis for new symbol objects and basic objects.

The final step in the sketch recognition software is mapping of recognized symbol objects to process graphic elements. This mapping is not necessarily a one to one or a one to many mapping. The envelope of process graphic elements is specified by the amount of details previously known by the algorithm. If for instance the symbol is a control valve and the desired process graphics library is chosen, the mapping may be one to one, but if the symbol is only a valve without details of what kind of valve it should be mapped as, then the envelope of process graphic elements is larger than one. The process graphic elements are dynamic elements that can be connected directly to process values using the same sketching techniques to input references to the process values, or the reference may be linked to the process graphic elements using other methods than sketching.
In summary, the input stroke recognition and following mapping to domain-specific knowledge can be divided into the following steps:
1. User draws a free-hand sketch of at least one industrial process element
2. Computer adapts a digital image of the sketch by geometrical operations (straight lines, corners) or image recognition
3. Computer clusters the adapted digital image of the sketch to basic objects representing an entity
4. Computer recognizes the basic objects and maps them to a set of symbol objects in a symbol library
5. Computer maps symbol objects to process graphic elements from a library

The recognition and mapping is however not limited to only said steps.

### User interface and interaction

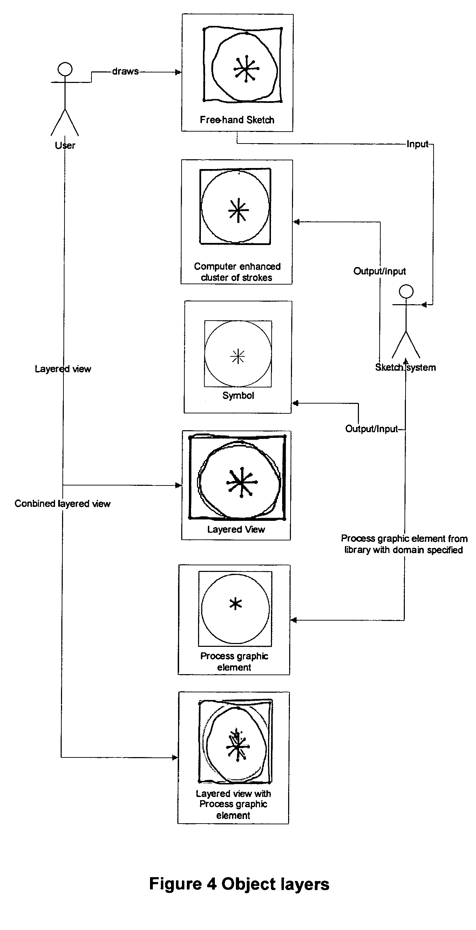

In order to assist the user in the engineering work, and to help understand the recognition and mapping algorithms, the main steps of the user interaction can be stored in separate layers in a memory in the process graphics editing tool. The different object layers are shown in Figure 4. The first layer is represented by the free-hand sketch input by a user of the sketch workflow system. The next layers comprise the computer-enhanced cluster of strokes, the symbol, and then the process graphic element. As shown in Figure 4, the separate layers are separately stored in the computer system, and may be combined in layered views throughout the process graphics generation process and during the design of the industrial process.

The user can view these different layers of each object and interact with the system through a user interface and adapt the element selected by the process graphics editor at every stage to modify the resulting process graphic elements. The layers can also be combined to give added information about steps in the process such as debugging information when a recognition and mapping is not correct. The method allows easy switching between different stages of the engineering process Digital data representing the graphical objects are stored in layers representing the whole spectrum of the steps outlined above, from simple sketches of a system control diagram to full process graphics representations using the correct process graphics elements, logical colors, localization etc.

The present invention supplies the user with the possibility of recognizing the sketched designs and converting them to a real industrial domain and application specific process graphics without loosing the early work done in the design. This is an incremental manner where the system for instance first recognizes that the user has sketched a valve, and then - based on information about the domain, work processes, libraries used and input from the user - can make a correct mapping of the sketched valve with the specific visualization of a valve that applies in the current situation. Because of the nature of the applications, this information - once it is known - may be used to make correct mapping for a large number of objects. Where there still exists a plurality of possible substitutions, the system has to obtain the required information from the user. This information can be supplied by textual information connected to the object describing the content, context or references to process values. Another way of supplying the system with the required information to make the correct mappings is to combine sketching with speech recognition. By doing this the user can tell the recognition software what he is sketching, which domain this belongs to or which of a plurality of mappings that is to be used.

### System description

The basic elements of the system disclosed in this invention are described below and comprise the following:
- Engineering workstation
- Sketch input means
- Sketch presentation means
- Sketch recognition software
- Libraries of object definitions
- Organization method for layered process graphic elements

### Engineering workstation

The computer that handles user interaction is called the engineering workstation. The engineering workstation is either integrated with or electronically connected to a sketching input means, sketching presentation means and the set of libraries containing graphical objects mentioned above.

### Sketch input means

The sketches can be fed into the computer in two ways: either by drawing sketches directly onto a suitable computer input device or by scanning a sketched drawing. This invention does not restrict using any of these alternatives, both these or any future free-hand input means might be used.

The first method requires using a free-hand input device. Free-hand input devices allow the user to use free-hand drawing as an input means to the computer. There are basically two different types of technology available on the market today that provide this functionality. Touch-sensitive screens allow the user to interact by moving an object on the screen, e.g. pen, finger, stylus, etc. Here the mechanism provides both input and computer feedback: the drawn objects are shown on the screen. Alternatively one can use a system where a stylus or pen is used to draw/write on a conventional base (paper, whiteboard) and the actions of the pen/stylus are being tracked by some tracking mechanism. These input devices may provide real time registration of the manual drawings and real time presentation of the sketch.

The second method - scanning a sketched drawing - means that the user can draw sketches on paper and scan these sketches into electronic format afterwards. The electronic version of these sketches would then be stored on a first storage layer in the computer available for viewing and manipulation by means of the engineering workstation.

### Sketch presentation means

The sketches can be presented for viewing by the user in different manners. One solution is that the sketch input means described above is integrated with a sketch presentation means. This is the case for tablet pc's, touch sensitive screens, paper sketching, etc where the user can see what he/she is drawing directly. Another solution might be that the input and display means are separated, such that the user interacts on a touch-sensitive pad (or the like) and the desktop monitor, large screen or projector or the like presents the sketches to the user.

### Sketch recognition software

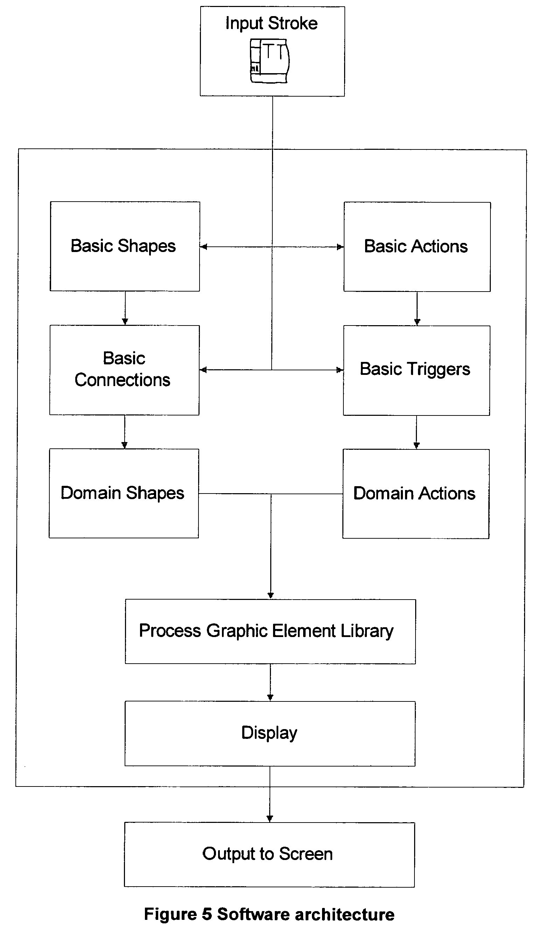

The free-hand sketches are recognized by a piece of software that handles and stores the user's interactions in electronic form. The sketch recognition software interprets the sketches drawn by a user and selects from a local or remotely accessible library one or more of a basic set of graphical objects to be inserted to the second layer. The software architecture is shown in Figure 5. The input manual strokes are registered as digital image data. Basic shapes and basic actions are used to process the image data and provide input data to identify basic connections and basic triggers. The results of this processing and interaction with the graphics processor provide input to domain shapes and domain actions. These modules then outputs image data to a process graphic element library, and said result is output to a display control device and output on a screen.

### Library databases

The library databases (for short: libraries) contain the relevant objects that will be inserted into the process graphics. The databases can be located on the engineering workstation or on another storage means that can be accessed from the engineering workstation.

The system comprises typically three different object libraries:
- a first library of basic objects (f inst stroke clusters),
- a second library of symbol objects used to map the basic objects to symbol objects and
- a third library consisting of domain or customer specific graphical representations of the symbol objects, called process graphic elements.
   The libraries may include several versions of the same object and the versions are linked to each other as different users of the system may prefer to draw the same object in different ways. The mapping of sketches to basic objects, basic objects to symbol objects and symbol objects to process graphic elements can be added to the different libraries by training of the system.

### Organization method for layered process graphic elements

The layered process graphic elements are handled and stored by an appropriate organization method. This method allows each process graphic element in the process graphics to be stored as several layers in such a manner that all layers can be retrieved into view for display and manipulation to the user. Each object can be modified and changed in any of the layers, potentially causing the contents of other layers to change consequently.

### Description of software for sketch parsing, symbol recognition and mapping

The sketch recognition task is divided into several steps, where the result from each step is stored in a separate layer that can be freely edited by the user later. Any of the steps can be executed separately at any stage of the process.

### Sketch parsing, step 1

In the first step of the sketch recognition the computer parses the user's input strokes into clusters representing the intended individual objects. To do this, the computer adapts the sketch by straightening out lines, corners, etc. The computer further splits the user input strokes into separate individual segments and groups these into clusters. These clusters are the identified individual objects that will be used as a basis for the symbol recognition in step 2.

### Symbol recognition, step 2

During step 2 of the sketch recognition, the computer maps the individual objects identified in step 1 to basic symbols from the basic symbol library.
The computer may find a hit immediately, or there may be several possible matches. For example, a 'valve' symbol can be identified, but in the basic symbol library this symbol matches the symbols for 'ball valve', 'safety valve', 'manual valve' or 'control valve'. By using a computer algorithm based on statistics or learning, the computer can evaluate which basic symbol matches the input best. As possible matches are identified by the system, the single most likely match can be chosen automatically or a selection of the most likely matches can be presented to the user as a selection means, for instance a pop-up menu similar to 'IntelliSense' used in computer programming or T9 dictionary found on mobile phones.

### Symbol mapping, step 3

During step 3, the computer will map the basic symbols identified in step 2 to an element from a process graphics library.

Generally, there will be a one-to-one mapping between the basic symbols identified in step 2, and the symbol in the process graphics library. However, there may also be several possible matches similar to the basic symbol identification in step 2.

The process graphics elements generally contain dynamic properties which are controlled by some property in the process. Connecting the process graphics element to a process signal can be done by making use of computer recognized handwriting or speech recognition or by browsing through a structure. This task can also be made easier by building some knowledge of the plant structure into the system.

The symbol recognition and mapping software modules can be trained by letting the user draw several examples of a symbol. Likewise, new templates for basic symbols can be added to the library as the user teaches the computer new symbol types and shapes.

Context knowledge such as domain knowledge or knowledge about the current user workflow can be added to the system to increase accuracy of the system in identifying symbols and in mapping symbols to process graphics elements. The accuracy of the system can also be augmented by adding image recognition, handwriting and/or speech recognition intelligence.

Handwriting recognition or speech recognition can be used to add symbols to the sketch. For example, the user may write the equipment name for - say - a pump or speak it out loudly while pointing at the drawing where the pump should be inserted. By using handwriting or speech recognition the computer will identify the exact equipment name and look it up in the process control system. From the process control system the computer can identify the object type and thus the correct basic symbol and process graphics element to insert in the drawing.

### Example scenarios

The sketching methodology can be used in many different scenarios for different purposes and for different aspects of process control. The three main scenarios outlined below relate to engineering of process graphics, maintenance of process graphics and run-time operational interaction with the process control system.

### Engineering of process graphics

When used in the engineering phase, the sketching methodology is used by the engineers who develop the process control system, plant structural systems, plant utilities, operator interface among others. This is normally a combination of control engineers, process engineers, chemists, physicists, graphical designers, human factors psychologists etc. They are familiar with different representations of the process plant where some of them work with a process and instrumentation diagram (P & ID), some with a system control diagram (SCD) and others with the process graphics.

In this scenario there are many process graphics to be designed - an industrial process plant might have somewhere between 20 and 5000 process graphics according to size and complexity of the process to be controlled. In the process of creating all these process graphics the sketching methodology can decrease the time spent for creating each process graphic because it is significantly more efficient to use than traditional interfaces.

Furthermore, the outcome of this design process is at this phase not clear, giving the engineers a quite wide scope of work. There can be quite large variations in design and structure for each iteration, necessitating interaction means that can handle large changes for each iteration of the design.

It is also important to highlight the benefits resulting from the layered design of the sketches in particular. This facilitates the interdisciplinary collaboration between the many parties involved, simplifying the engineering process as a whole. The layered design allows engineers from different disciplines to view and work with the specific representation of the process plant that they are most familiar with, and the data are all stored in the same context eliminating errors that might occur when moving from one representation to another.

### Maintenance of process graphics

This scenario is basically quite similar to the one above, but has some specific characteristics relevant that can serve to describe the dimensions of the proposed solution. Maintenance of process graphics refers to minor adjustments of the process graphics that are carried out after the plant has been put into operation. Such modifications of the process graphics might be required due to poor original design, new operational performance criteria or redesign of the process itself. Recent control room and control system design theory highlights the need to allow for such modifications as it rarely happens that an ideal design is made before having operational experience.

This maintenance is normally performed by engineers that are responsible for the performance of the operator interfaces; typically control engineers, human factors and/or industrial designers. The scope of this work is normally quite limited, as one has to consider the existing process graphics and it is normally conducted on smaller sections of the system at a time.

In this scenario, it is particularly important to highlight the integration of the sketching software with traditional process graphics engineering tools. If the sketch interaction were implemented as a separate engineering tool or another non-integrated fashion, it would not be efficient to use for such minor upgrades. It needs to be highly integrated with the engineering and implementation tools with seamless switching between the various interaction modes.

### Runtime operational interaction

This scenario does not relate to the creation of process graphics in the normal sense, but rather to a temporal, ad-hoc means of combining and juxtaposing different process graphic elements in the operational phase. This is done by the process operator who needs to view information in relation to a situation that has occurred, but where the information is currently available from many different process graphics. The sketching methodology can here be used to quickly put together various parts of existing process graphics, selecting only the elements necessary for the task at hand.

The relevant features of the sketching methodology for this scenario are the ease of use and natural interaction that the sketching represents. It is very natural for the operator to select objects and groups of objects in one or a plurality of the current process graphics, drag them over to a new temporal process graphic and arrange them according to the situation at hand.

Having described preferred embodiments of the invention it will be apparent to those skilled in the art that other embodiments incorporating the concepts may be used. These and other examples of the invention illustrated above are intended by way of example only and the actual scope of the invention is to be determined from the following claims.

## Claims

1. Method for generating process graphics for an industrial process, comprising the following steps:
- recording a digital image of a graphic in the form of a sketch drawn free-hand by a user representing an industrial process element into a computing device,
- processing the digital image to provide an enhanced process graphic element, and
- identifying said digital image as at least one process graphic element by using at least a library providing information helping to interpret said digital image and geometrical sketch elements of said digital image.

2. Method according to claim 1, wherein the identifying step further comprise:
- an identification preparation step clustering said geometrical sketch elements according to information given in a first library,
- identifying said sketches as symbol objects using a second library containing process symbols, and
- matching said symbols objects against a third library containing process graphic elements.

3. Method according to claim 1 or 2,
**characterized in that** results from said steps are separately stored in a layered structure wherein a layer represents said results of at least one of said steps.

4. Method according to claim 1-3,
**characterized in that** said results on said layers are available for use in later work, comprising redesign work.

5. Method according to one of the preceding claims,
**characterized in that** said method involves additionally at least one of the following user input means:
- text writing and character recognition,
- audio recording and speech recognition.

6. Method according to claim 5,
**characterized in that** said user input means is used to link a single instance of said process graphic element to an instance of process equipment in a process plant.

7. Method according to claim 5,
**characterized in that** said user input means is used to identify process value display means to be linked to said instance of process equipment.

8. Method according to claim 5,
**characterized in that** at least one of the following means are used to support the identification of a symbol object on the basis of said digital image representing said sketch:
a) statistics of prior use of symbol objects,
b) statistics of use of symbol objects in current context,
c) knowledge about workflow,
d) adaptive learning,
e) said user input means,
f) menu of alternative symbol objects, said menu being assembled using means a) to e).

9. Method according to claim 5,
**characterized in that** at least one of the following means are used to support the identification of a process graphic element on the basis of said digital image representing said sketch:
a) statistics of prior use of process graphic elements,
b) statistics of use of process graphic elements in current context,
c) knowledge about workflow,
d) adaptive learning,
e) said user input means,
f) menu of alternative process graphic elements, said menu being assembled using means a) to e).

10. Method according to one of the preceding claims,
**characterized by** providing at least one of the following information to said user:
- real time process data
- process simulation data.

11. System for generating process graphics for an industrial process,
**characterized by** comprising the following components.
- sketch input means providing a digital image of a free-hand-drawn sketch representing an industrial process element,
- sketch presentation means,
- an engineering workstation,
- a sketch recognition software,
- at least one library of computerized/electronic objects, and
- local or distributed storage means for software components and libraries.

12. System according to claim 11,
**characterized in** a storage means with a layered structure wherein one layer holds a result from at least one processing step in said sketch recognition software.

13. System according to claim 12,
**characterized in that** said results on said layers are available for use in later work, comprising redesign work.

14. System according to claim 11,
**characterized in** comprising at least one of the following user input means:
- text writing and character recognition software, and
- audio recording and speech recognition software.

15. System according to one of the preceding claims,
**characterized in that** said sketch recognition software comprises at least one of the following means to support the identification of a symbol object on the basis of said digital image representing said sketch:
a) statistics of prior use of symbol objects,
b) statistics of use of symbol objects in a current context,
c) knowledge about workflow,
d) adaptive learning,
e) said user input means,
f) menu of alternative symbol objects, said menu being assembled using means a) to e).

16. System according to one of the preceding claims,
**characterized in that** said sketch recognition software comprises at least one of the following means to support the identification of a process graphic element on the basis of said digital image representing said sketch:
a) statistics of prior use of process graphic elements,
b) statistics of use of process graphic elements in a current context,
c) knowledge about workflow,
d) adaptive learning,
e) said user input means,
f) menu of alternative process graphic elements, said menu being assembled using means a) to e).

17. System according to one of the preceding claims,
**characterized in** making at least one of the following information available to a user of said system:
- real-time process data,
- process simulation data.
